# EUROPEAN PATENT APPLICATION

(11) **EP 4 625 529 A1**
(43) Date of publication of application: **01.10.2025**
(21) Application number: 24750547.2
(22) Date of filing: 30.01.2024
(51) Int. Cl.: H01M 4/1391, H01M 4/04, H01M 4/1397, H01M 4/62, H01M 10/052, H01M 4/02

(54) **POSITIVE ELECTRODE, METHOD FOR MANUFACTURING SAME, AND LITHIUM SECONDARY BATTERY COMPRISING POSITIVE ELECTRODE**

(30) Priority: 01.02.2023 KR 20230013847
(71) Applicant: LG Energy Solution, Ltd., Seoul 07335 (KR)
(72) Inventor: KOO, Dae Ryung, Daejeon 34122 (KR); JOO, Mun Kyu, Daejeon 34122 (KR); LEE, Il Ha, Daejeon 34122 (KR); CHAE, Jong Hyun, Daejeon 34122 (KR); KWON, Yo Han, Daejeon 34122 (KR); CHOI, Seong Won, Daejeon 34122 (KR)
(74) Representative: Hoffmann Eitle
(86) International application number: PCT/KR2024/001433
(87) International publication number: WO 2024/162749

(57) **Abstract**

Disclosed is a positive electrode and a lithium secondary battery including the positive electrode, the positive electrode including a positive electrode active material and a carbonate-containing compound containing a fluorine-containing functional group in an active material layer. In a C 1s spectrum by X-ray photoelectron spectroscopy (XPS) analysis, intensities of peaks satisfy a certain ratio, and, since the positive electrode has excellent resistance characteristics and suppresses degradation, life characteristics may be improved. The lithium secondary battery has improved resistance characteristics, and since degradation of the positive electrode and negative electrode may be suppressed to prevent a sudden drop in capacity, life characteristics may also be improved.

## Description

### TECHNICAL FIELD

### Cross-reference to Related Applications

This application claims priority from Korean Patent Application No. 10-2023-0013847, filed on February 1, 2023, the disclosure of which is incorporated by reference herein.

### Technical Field

The present invention relates to an overlithiated positive electrode, a method of preparing a positive electrode which includes a method of overlithiating the positive electrode, and a lithium secondary battery including the positive electrode.

### BACKGROUND ART

Requirements for the use of alternative energy or clean energy have increased due to the rapid increase in the use of fossil fuels, and, as a part of this trend, power generation and electricity storage using an electrochemical reaction are the most actively researched areas.

Currently, a typical example of an electrochemical device using the electrochemical energy may be a secondary battery and there is a trend that its usage area is expanding more and more. In recent years, demand for secondary batteries as an energy source has been significantly increased as technology development and demand with respect to portable devices, such as portable computers, mobile phones, and cameras, have increased, and, among these secondary batteries, lithium secondary batteries having high energy density, i.e., high capacity have been subjected to considerable research and have been commercialized and widely used.

In general, a secondary battery is composed of a positive electrode, a negative electrode, an electrolyte, and a separator. The negative electrode includes a negative electrode active material in which lithium ions released from the positive electrode are intercalated and deintercalated, and silicon-containing active material particles having large discharge capacity may be used as the negative electrode active material. The silicon-containing active material particle may correspond to silicon (Si) or SiOₓ (0<x<2). The silicon-containing active material particle has an advantage of large theoretical capacity and low price. However, since the silicon-containing active material particle has an excessively large volume change during battery operation, it is disadvantageous in that lifetime of the battery is rapidly decreased as the battery is cycled.

Thus, in order to minimize the volume change of the silicon-containing active material particle, there is a method of using only a portion of total capacity of the silicon-containing active material particles. For this purpose, a so-called pre-lithiation process is used in which lithium ions are intercalated into the negative electrode including the silicon-containing active material particles in advance. Specifically, if the lithium ions are intercalated into the negative electrode by a method such as transferring lithium metal to the negative electrode, total capacity of the negative electrode may be reduced to a level of reversible capacity as the lithium ions react at irreversible sites of the negative electrode. Thus, since an amount of the lithium ions intercalated during battery operation may be suitably reduced to a level required for the battery operation, the volume change of the silicon-containing active material particles may be minimized.

However, in the process of performing pre-lithiation by disposing the lithium metal on a surface of the negative electrode, excessive heat is generated due to an alloy reaction between lithium and silicon, and a possibility of ignition due to a reaction between the lithium and moisture also increases. Also, in a process of notching and punching the negative electrode, the possibility of ignition may be further increased due to an increased in reaction area between the lithium and the silicon-containing active material, and there is a serious safety issue in that there also exists a possibility of ignition caused by pre-lithiated silicon-containing active material particles.

Therefore, there is a need for a new technique which may suppress the possibility of excessive heat generation and ignition while improving the lifetime of the battery by intercalating lithium ions into the negative electrode in advance before battery operation.

### DISCLOSURE OF THE INVENTION

### TECHNICAL PROBLEM

An aspect of the present invention provides a method of preparing a positive electrode which does not cause exfoliation or crack generation of an active material when the positive electrode is overlithiated and may significantly shorten time required for an overlithiation process.

Another aspect of the present invention provides an overlithiated positive electrode in which a decrease in capacity is suppressed, because a cracking phenomenon of the active material during cycle operation is suppressed due to stable overlithiation and formation of a solid electrolyte interface (SEI) film on a surface of the positive electrode, resistance characteristics are excellent, and an amount of lithium decreased is less even during long-term cycles.

Another aspect of the present invention provides a lithium secondary battery in which life characteristics are improved because unique characteristics of a negative electrode active material may be achieved without disadvantages due to the control of an available region of a negative electrode by including the overlithiated positive electrode, a synergistic effect may be expected in improving the life characteristics particularly due to excellent ability to suppress a degradation phenomenon, and a problem of output reduction is minimized even during long-term operation due to a low resistance increase rate.

### TECHNICAL SOLUTION

In order to solve the above-described tasks, according to an aspect of the present invention, there is provided a positive electrode including a current collector, and a positive electrode active material layer on the current collector, the positive electrode active material layer comprising a positive electrode active material and a carbonate-containing compound comprising a fluorine-containing functional group. In a C 1s spectrum by X-ray photoelectron spectroscopy (XPS) analysis, a peak intensity I_{C1} of a peak P_{c1} at a binding energy in a range of 288 eV to 292 eV is lower than a peak intensity I_{C2} of a peak P_{c2} at a binding energy in a range of 284 eV to 286 eV.

In order to solve the above-described tasks, according to another aspect of the present invention, there is provided a method of preparing a positive electrode which includes forming a positive electrode structure comprising a transfer stack comprising a base film and a lithium metal layer on the base film on a preliminary positive electrode active material layer, the lithium metal layer and the preliminary positive electrode active material layer being in contact with each other, and impregnating the positive electrode structure in an electrolyte comprising a carbonate-containing compound comprising a fluorine-containing functional group.

In order to solve the above-described tasks, according to another aspect of the present invention, there is provided a lithium secondary battery including the positive electrode, a negative electrode, and a separator between the positive electrode and the negative electrode. In order to solve the above-described tasks, according to another aspect of the present invention, there is provided a lithium secondary battery including an electrode assembly comprising an overlithiated positive electrode comprising an overlithiated positive electrode active material layer, a negative electrode comprising silicon particles as an active material, and a separator between the overlithiated positive electrode and the negative electrode, a battery case configured to accommodate the electrode assembly; and an electrolyte injected into the battery case and configured to impregnate the electrode assembly, the electrolyte comprising a carbonate-containing compound comprising a fluorine-containing functional group. An amount of the carbonate-containing compound comprising the fluorine-containing functional group measured by inductively coupled plasma optical emission spectroscopy (ICP-OES) is 3.5 wt% or more based on a total weight of the electrode assembly and the electrolyte, and with the proviso that an amount of lithium based on a total weight of the overlithiated positive electrode active material layer of the overlithiated positive electrode measured by ICP-OES is less than 5.0 wt%.

### ADVANTAGEOUS EFFECTS

A method of preparing a positive electrode according to the present invention may mitigate a phenomenon of exfoliation and a phenomenon of cracking of an active material by overlithiation through electrolyte impregnation, accordingly, may reduce a side reaction with the electrolyte, and has an advantage of being able to reduce a process risk arising from pre-lithiation of a negative electrode.

Also, a positive electrode according to the present invention is overlithiated, wherein, since it is prepared by the above method, a solid electrolyte interface (SEI) film is uniformly formed on a surface of the positive electrode while the positive electrode is stably overlithiated, and thus, it has an advantage in that a decrease in capacity may be suppressed, because the cracking phenomenon of the active material during cycle operation is suppressed, resistance characteristics are excellent, and an amount of lithium decreased is less even during long-term cycles.

In addition, a lithium secondary battery according to the present invention may reduce an available region of the negative electrode without loss of lithium in the positive electrode as lithium ions move to the negative electrode in a formation process by including the overlithiated positive electrode, may suppress volume expansion of the negative electrode in some cases, may increase lifetime of the battery by eliminating causes of battery degradation such as a side reaction with the electrolyte, may suppress electrode degradation by improving stability of the surface of the positive electrode through overlithiation using an electrolyte including a fluorine-containing carbonate-containing compound, and accordingly may also prevent occurrence of a phenomenon of a sudden drop in capacity. Furthermore, from an advantage of a low resistance increase rate, an advantage of being able to maintain output at an excellent level for a long period of time may be expected.

### BRIEF DESCRIPTION OF THE DRAWINGS

FIG. 1 is a schematic view illustrating step S1 in a method of preparing a positive electrode according to an embodiment of the present invention.
FIG. 2 is a schematic view illustrating step S1 using a transfer stack including a polymer layer in the method of preparing a positive electrode according to the embodiment of the present invention.
FIG. 3 is a schematic view illustrating step S1a in the method of preparing a positive electrode according to the embodiment of the present invention.
FIG. 4 is a schematic view illustrating step S1b in the method of preparing a positive electrode according to the embodiment of the present invention.
FIG. 5 is a scanning electron microscope (SEM) image of a cross section of a positive electrode of Example 1-5 which is prepared by the method of preparing a positive electrode according to the embodiment of the present invention.
FIG. 6 is a scanning electron microscope (SEM) image of a cross section of a positive electrode of Comparative Example 1-2.
FIG. 7 is results of measurement of surface resistance according to changes in state of charge (SOC).
FIG. 8 is results of measurement of charge transfer resistance according to changes in SOC.
FIG. 9 is results of measurement of diffusion resistance according to changes in SOC.
FIG. 10 is results of lifetime measurement according to Experimental Example 3, wherein capacity according to cycle progression is measured.
FIG. 11 is C 1s spectra obtained by X-ray photoelectron spectroscopy (XPS) analysis of surfaces of positive electrodes of Example 2-5 and Comparative Example 2-1.
FIG. 12 isF 1s spectra obtained by XPS analysis of the surfaces of the positive electrodes of Example 2-5 and Comparative Example 2-1.
FIG. 13 is O 1s spectra obtained by XPS analysis of the surfaces of the positive electrodes of Example 2-5 and Comparative Example 2-1.

### MODE FOR CARRYING OUT THE INVENTION

Hereinafter, the present invention will be described in more detail to allow for a clearer understanding of the present invention.

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include," "comprise," or "have" when used in this specification, specify the presence of stated features, numbers, steps, elements, or combinations thereof, but do not preclude the presence or addition of one or more other features, numbers, steps, elements, or combinations thereof.

D₅₀ in the present specification may be defined as a particle diameter at a cumulative volume of 50% in a particle size distribution curve. The D₅₀, for example, may be measured by using a laser diffraction method. The laser diffraction method may generally measure a particle diameter ranging from a submicron level to a few mm and may obtain highly repeatable and high-resolution results.

### Positive Electrode

According to an embodiment of the present invention, provided is a positive electrode which is characterized in that it includes a positive electrode active material layer which includes a positive electrode active material and a carbonate-containing compound containing a fluorine-containing functional group; and a current collector on which the positive electrode active material layer is disposed, wherein, in a C 1s spectrum by X-ray photoelectron spectroscopy (XPS) analysis, a peak intensity I_{C1} at a binding energy of 288 eV to 292 eV is lower than a peak intensity I_{C2} at a binding energy of 284 eV to 286 eV.

The positive electrode is an overlithiated positive electrode, wherein, since it is prepared by an overlithiation method to be described later, particularly, by performing a process of impregnation in an electrolyte in which a carbonate-containing compound containing a fluorine-containing functional group is included, the carbonate-containing compound containing the fluorine-containing functional group may be deposited on a surface of the positive electrode and may penetrate into internal pores, and thus, it may suppress a phenomenon of cracking of the positive electrode active material on the surface through a film formed inside and outside the positive electrode from the carbonate-containing compound containing the fluorine-containing functional group which penetrates into the internal pores as well as the surface, and may significantly contribute to suppress degradation of the entire positive electrode during cycle operation.

Also, lithium intercalated through the overlithiation may move to a negative electrode during battery operation to play a role in reducing an available region of the negative electrode. Accordingly, since an available range of negative electrode capacity may be reduced without loss of lithium in the positive electrode active material due to the lithium overlithiated in the positive electrode, an excessive volume change of a silicon-containing active material may particularly be suppressed and life characteristics of the battery may be improved. Also, since the capacity of the positive electrode active material may be used in an entire range, there is an advantage in that battery efficiency is increased and energy density may also be maximized.

The positive electrode according to the embodiment of the present invention is characterized in that pre-lithiation is not performed by typically contacting a lithium metal layer to the negative electrode, but the lithium metal layer is transferred to the positive electrode and rolled and lithium ions intercalated into the positive electrode are then transferred to the negative electrode in a formation process of the battery. A phenomenon of exfoliation of the active material which newly occurs in a process of transferring lithium to the positive electrode rather than the negative electrode or a problem of reduction in process efficiency due to long-term overlithiation may be overcome through electrolyte impregnation.

That is, since the negative electrode and the lithium metal layer are not in contact and the lithium ions are not directly intercalated into the negative electrode from the lithium metal layer, a phenomenon of excessive heat generation due to an alloy reaction of lithium and silicon at the negative electrode may be avoided and a possibility of ignition due to a reaction between the lithium and moisture may be significantly reduced. Furthermore, since the lithium ions are not intercalated into the negative electrode during notching and punching the negative electrode (because the pre-lithiation has not progressed), a possibility of ignition during the notching and punching process may be significantly reduced.

According to an embodiment of the present invention, the positive electrode is characterized in that, in a C 1s spectrum by XPS analysis, a peak intensity I_{C1} of a peak P_{c1} at a binding energy of 288 eV to 292 eV is lower than a peak intensity I_{C2} of a peak P_{c2} at a binding energy of 284 eV to 286 eV. Also, the I_{C2}/the I_{C1} may preferably be 1 or less, and may be 0.9 or less, 0.8 or less, or 0.7 or less.

In the C 1s spectrum by the XPS analysis, peaks may appear due to compounds with functional groups in which carbon participates in bonding, and, for example, peaks may appear due to various factors such as a carbonate-containing by-product (-CO₃) or fluorocarbon (CF₂). Specifically, with respect to the peak P_{C1}, for example, it appears due to a carbonate-containing by-product, wherein, with respect to the positive electrode according to the embodiment of the present invention, the fluorine-containing carbonate-containing compound is included in the positive electrode active material layer, but since a process of impregnating in the electrolyte is performed, a stable solid electrolyte interface (SEI) film may be formed on the surface and formation of the by-product may be prevented by the formation of the film, and thus, the peak P_{C1} may appear relatively small. Also, the peak P_{C2} is a peak that appears due to a general C-C bond or C-H bond, wherein it may usually be caused by electrode materials such as an active material and a binder, and may be in a relative relationship with the peak P_{C1}, for example, in a case in which the peak P_{C1} appears strong due to a lot of by-products, the peak P_{C2} may appear relatively weak.

In contrast, a stable film may not be formed in a case in which the process of impregnating in the electrolyte, particularly, a process of impregnating in an electrolyte, which does not include the fluorine-containing carbonate-containing compound, is not performed, and, accordingly, the peak P_{C1} may be strongly detected and this means that a relatively large amount of the carbonate by-product may be formed. Thus, the positive electrode according to the embodiment of the present invention may be characterized in that the peak P_{C1} may be relatively small and has a lower peak intensity than the peak P_{C2}. Furthermore, that the I_{C2}/I_{C1}, a ratio of the two peaks, is within the above-described range may be considered that an effect of overlithiation using the electrolyte impregnation is excellently achieved.

Also, in the C 1s spectrum, a peak P_{C3} at a binding energy of 286 eV to 288 eV may be detected. That is, the peak P_{C3} may be detected as a weak peak between the peak P_{C1} and the peak P_{C2}, and, for example, may appear due to a C-O bond or a C-C-F bond, and it may be a result of the inclusion of the fluorine-containing carbonate-containing compound in the positive electrode active material layer.

Also, according to an embodiment of the present invention, in an F 1s spectrum by XPS analysis of the positive electrode, a peak intensity I_{F1} of a peak P_{F1} at a binding energy of 687 eV to 689 eV may be lower than a peak intensity I_{F2} of a peak P_{F2} at a binding energy of 684 eV to 686 eV. Preferably, in the F 1s spectrum by the XPS analysis, the I_{F2}/the I_{F1}, a ratio of the two peaks, may be 1 or less, and may be 0.8 or less, 0.7 or less, or 0.6 or less.

In the F 1s spectrum by the XPS analysis, peaks may appear due to compounds with functional groups in which fluorine participates in bonding, and, for example, peaks may appear due to compounds having bonds such as C-F, P-F, Li-F, and S-F.

Specifically, with respect to the peak P_{F2}, it appears due to a bond between a metal and fluorine, wherein, for example, it may be due to a bond such as Li-F. With respect to the positive electrode according to the embodiment of the present invention, the fluorine-containing carbonate-containing compound is included in the positive electrode active material layer, but, since the process of impregnating in the electrolyte is performed, Li-F may be formed by reacting lithium with the fluorine-containing functional group while the solid electrolyte interface (SEI) film is formed on the surface, and accordingly, durability of the film may be increased.

Furthermore, the peak P_{F2} is a peak that appears due to a general C-F, P-F, or S-F bond, wherein it may usually be caused by the electrode materials such as the active material and the binder, and may be in a relative relationship with the peak P_{F2}, for example, in a case in which the peak P_{F2} appears strong due to a lot of Li-F, the peak P_{F1} may appear relatively weak. Accordingly, it is desirable that the peak intensity I_{F1} of a peak P_{F1} is lower than the peak intensity I_{F2} of the peak P_{F2}, and, in a case in which the I_{F2}/I_{F1}, the ratio of the two peaks, satisfies the above-described range, it may be considered that the overlithiation of the positive electrode according to the embodiment of the present invention has been normally achieved.

Also, in an O 1s spectrum by XPS analysis of the positive electrode, a peak intensity I_{O1} of a peak P_{O1} at a binding energy of 531 eV to 533 eV may be 4.00 or less, and preferably, may be 3.90 or less, 3.80 or less, or 3.75 or less.

With respect to the peak according to the O 1s spectrum, it may appear as a single peak, or may appear due to bonds such as C-O, C=O, or CO₃. The bonds usually appeared may not be due to the electrode materials, but may be due to the by-product, and it may mean that the lower the peak intensity I_{O1} of the peak P_{O1} is, the smaller the amount of the by-product is. Accordingly, the I_{O1} may be 4.00 or less, and may preferably satisfy the above-described range, and the satisfaction of the range may mean that overlithiation according to an embodiment of the present invention has been performed well such that a stable solid electrolyte interface film has been formed.

According to an embodiment of the present invention, the carbonate-containing compound containing the fluorine-containing functional group, for example, may include at least one selected from the group consisting of fluoroethylene carbonate, methyl 2,2,2-trifluoro ethyl carbonate, and 2,2,2-trifluoroethyl carbonate, and may preferably be fluoroethylene carbonate. In a case in which overlithiation is performed by including the carbonate-containing compound containing the fluorine-containing functional group in the electrolyte during the overlithiation of the positive electrode, a stable solid electrolyte interface film may be formed on the surface of the positive electrode, and the compound may remain in the positive electrode active material layer. Also, the carbonate-containing compound containing the fluorine-containing functional group may be included in an amount of 10 wt% or less based on a total weight of the positive electrode active material layer, and may preferably be included in an amount of 8 wt% or less. This range may be confirmed from the XPS analysis result as described above, wherein some may react with lithium in an overlithiation process, and the remainder may remain in the positive electrode active material layer.

According to an embodiment of the present invention, the positive electrode includes a positive electrode active material layer and a current collector on which the positive electrode active material layer is disposed, wherein the current collector is not particularly limited as long as it has conductivity without causing adverse chemical changes in a battery, and, for example, stainless steel, aluminum, nickel, titanium, fired carbon, or aluminum or stainless steel that is surface-treated with one of carbon, nickel, titanium, silver, or the like may be used. Also, the positive electrode collector may typically have a thickness of 3 µm to 500 µm, and microscopic irregularities may be formed on the surface of the collector to improve adhesion of the positive electrode active material. The positive electrode collector, for example, may be used in various shapes such as that of a film, a sheet, a foil, a net, a porous body, a foam body, a nonwoven fabric body, and the like.

According to an embodiment of the present invention, the positive electrode active material layer may include a positive electrode active material, a positive electrode conductive agent, and a positive electrode binder. The positive electrode active material is a material capable of causing an electrochemical reaction, wherein it may be a lithium transition metal oxide. For example, the positive electrode active material may include at least one selected from the group consisting of a layered compound, such as a lithium cobalt oxide or a lithium nickel oxide, which is substituted with at least one transition metal; a lithium manganese oxide substituted with at least one transition metal; a lithium nickel-based oxide represented by Li [Ni_{1-y}M¹_{y}]O₂ (where, M¹ is at least one selected from cobalt (Co), manganese (Mn), aluminum (Al), copper (Cu), iron (Fe), magnesium (Mg), boron (B), chromium (Cr), zinc (Zn), and gallium (Ga), and 0.01≤y≤0.7); a lithium nickel cobalt manganese composite oxide represented by Li_{1+z}[Ni_{b}Mn_{c}Co_{1-(b+c+d)}M²_{d}]O₍₂₋ₑ₎Aₑ (where, M² is at least one selected from the group consisting of Al, Mg, Cr, Ti, silicon (Si), and yttrium (Y), A is at least one selected from the group consisting of fluorine (F), phosphorus (P), and chlorine (Cl), and -0.5≤z≤0.5, 0.1≤b≤0.8, 0.1≤c≤0.8, 0≤d≤0.2, 0≤e≤0.2, and b+c+d<1); and an olivine-based lithium metal phosphate represented by Li₁₊ₓ[M³_{1-q}M⁴_{q}]PO₄₋ᵣXᵣ (where, M³ is at least one selected from the group consisting of Fe, Mn, Co, and Ni, M⁴ is at least one selected from the group consisting of Al, Mg, and Ti, X is at least one selected from the group consisting of F, sulfur (S), and nitrogen (N), and -0.5≤x≤ 0.5, 0≤q≤0.5, and 0≤r≤0.1).

Specifically, the positive electrode active material may be composed of the lithium nickel-based oxide, the lithium nickel cobalt manganese composite oxide, the olivine-based lithium metal phosphate, or a combination thereof, and these may be combined to configure the positive electrode active material layer as one layer or a separate layer.

According to an embodiment of the present invention, more specifically, the positive electrode active material may include a compound of Formula 1 below, and may more specifically be the compound of Formula 1 below.

[Formula 1] Li₁₊ₓ[NiₐCo_{b}Mn_{c}M¹_{(1-a-b-c)}]O_{(2-d)}A_{d}

In Formula 1,
M¹ is at least one selected from the group consisting of Al, Mg, Cr, Ti, Si, and Y, and may specifically be Al.
A is at least one selected from the group consisting of F, P, and Cl, and may specifically be F.
x may satisfy -0.5≤x≤0.5, specifically, -0.3≤x≤0.3.
a may satisfy 0.6≤a<1, specifically, 0.7≤a≤0.9.
b may satisfy 0.03≤b≤0.1, specifically, 0.05≤b≤0.1.
c may satisfy 0.03≤c≤0.1, specifically, 0.05≤c≤0.1.
d may satisfy 0≤d≤0.1, specifically, 0≤d≤0.05.
a, b, and c satisfy 0<a+b+c≤1, specifically, a+b+c=1.

The compound of Formula 1 may be in a form of a particle.

The compound of Formula 1 may be in a form of a secondary particle in which a plurality of primary particles are bonded to each other. Specifically, the compound of Formula 1 may be in the form of a secondary particle in which 10 or more primary particles are bonded to each other. Accordingly, there is an effect that lithium may be uniformly intercalated into and deintercalated from the positive electrode active material.

The compound of Formula 1 may have a D₅₀ of 5 µm to 15 µm, particularly 7 µm to 12 µm, and more particularly 9 µm to 10 µm. The D₅₀ may be a D₅₀ of the secondary particle. Since a positive electrode slurry is easily dispersed when the above range is satisfied, uniform coating of the positive electrode active material layer is possible.

The positive electrode active material may be included in an amount of 90 wt% to 99 wt%, particularly 92 wt% to 98 wt%, and more particularly 95 wt% to 98 wt% in the positive electrode active material layer.

According to an embodiment of the present invention, the positive electrode active material layer may further include a positive electrode binder. The positive electrode binder improves adhesion between the positive electrode active material particles and adhesion between the positive electrode active material and the positive electrode collector. Specific examples of the positive electrode binder may be polyvinylidene fluoride (PVDF), polyvinylidene fluoride-hexafluoropropylene copolymer (PVDF-co-HFP), polyvinyl alcohol, polyacrylonitrile, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated-EPDM, a styrene-butadiene rubber (SBR), a fluorine rubber, or various copolymers thereof, and any one thereof or a mixture of two or more thereof may be used.

The positive electrode binder may be included in an amount of 0.5 wt% to 5.0 wt%, particularly 1.0 wt% to 2.5 wt%, and more particularly 1.0 wt% to 2.0 wt% in the positive electrode active material layer.

According to an embodiment of the present invention, the positive electrode active material layer may further include a positive electrode conductive agent. The positive electrode conductive agent is used to provide conductivity to the electrode, wherein any conductive agent may be used without particular limitation as long as it has suitable electron conductivity without causing adverse chemical changes in the battery. Specific examples of the positive electrode conductive agent may be graphite such as natural graphite or artificial graphite; carbon based materials such as carbon black, acetylene black, Ketjen black, channel black, furnace black, lamp black, thermal black, and carbon fibers; powder or fibers of metal such as copper, nickel, aluminum, and silver; conductive whiskers such as zinc oxide whiskers and potassium titanate whiskers; conductive metal oxides such as titanium oxide; or conductive polymers such as polyphenylene derivatives, and any one thereof or a mixture of two or more thereof may be used.

The positive electrode conductive agent may be included in an amount of 0.5 wt% to 30.0 wt%, particularly 0.5 wt% to 10.0 wt%, and more particularly 1.0 wt% to 4.0 wt% in the positive electrode active material layer.

### <Method of Preparing Positive Electrode>

A method of preparing a positive electrode according to the present invention is characterized in that it includes steps of: disposing a transfer stack, which includes a base film and a lithium metal layer disposed on the base film, on a preliminary positive electrode active material layer to form a positive electrode structure such that the lithium metal layer and the preliminary positive electrode active material layer are in contact with each other (S1); and impregnating the positive electrode structure in an electrolyte in which a carbonate-containing compound containing a fluorine-containing functional group is included (S2).

The positive electrode as described above may be prepared by the above preparation method, the prepared positive electrode may have peak characteristics according to the C 1s spectrum, F 1s spectrum, and O 1s spectrum by the XPS analysis, and, since specific details are the same as those described above, descriptions thereof are omitted.

Also, according to an embodiment of the present invention, the method of preparing a positive electrode may further include steps of: rolling the positive electrode structure (S1a); and removing the base film from the transfer stack after the rolling (S1b), between step S1 and step S2.

Hereinafter, step S1, step S1a, step S1b, and step S2 will be sequentially described.

According to an embodiment of the present invention, step S1 of the method of preparing a positive electrode is a step of disposing a transfer stack, which includes a base film and a lithium metal layer, on a preliminary positive electrode active material layer to form a positive electrode structure such that the lithium metal layer and the preliminary positive electrode active material layer are in contact with each other.

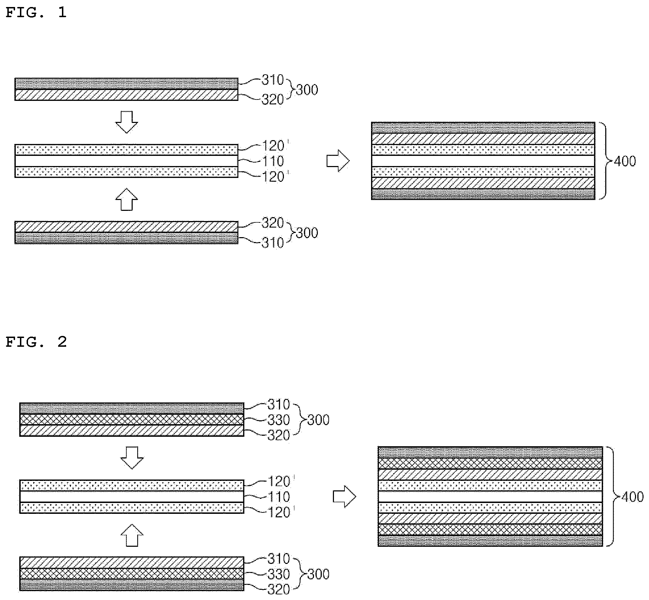

Referring to FIG. 1, a transfer stack 300 may include a base film 310 and a lithium metal layer 320 disposed on the base film 310. The base film 310 may be used without limitation as long as it is a material which may withstand high-temperature conditions that occur in a process of depositing the lithium metal layer 320 on the base film 310. Specifically, the base film may include at least one selected from the group consisting of polyethylene terephthalate (PET), polyimide (PI), poly (methylmethacrylate) (PMMA), polypropylene, polyethylene, and polycarbonate.

According to an embodiment of the present invention, the lithium metal layer may be disposed on the base film. The lithium metal layer plays a role in supplying lithium ions to the preliminary positive electrode active material layer. The lithium metal layer includes solid-phase lithium metal, and the lithium metal layer may specifically be formed of solid-phase lithium metal.

According to an embodiment of the present invention, in the transfer stack, the lithium metal layer may have a thickness of 1.0 µm to 10.0 µm, specifically, 2.0 µm to 9.0 µm, and may preferably have a thickness of 2.5 µm or more, 3.0 µm or more, 3.5 µm or more, or 4.0 µm or more, and 8.5 µm or less, 8.0 µm or less, 7.5 µm or less, or 7.0 µm or less. In a case in which the above range is satisfied, since a degree of cracking of the positive electrode active material particles on a surface of the positive electrode may be reduced, a decrease in initial capacity of the battery may be suppressed.

According to an embodiment of the present invention, a loading amount (unit: mAh/cm²) of the lithium metal layer may be 4% to 40% of a loading amount (unit: mAh/cm²) of the preliminary positive electrode active material layer, and may specifically be 12% to 35%, more specifically, 20% to 30%. When the above range is satisfied, since the formation of the by-product is small and lithium may be easily intercalated into the positive electrode active material, target lithium intercalation capacity may be easily achieved.

In step S1 according to the embodiment of the present invention, referring to FIG. 1, a preliminary positive electrode active material layer 120' is disposed on a positive electrode collector 110, and the transfer stack 300 may be disposed on the preliminary positive electrode active material layer 120' to form a positive electrode structure 400 such that the lithium metal layer 320 and the preliminary positive electrode active material layer are in contact with each other.

According to an embodiment of the present invention, the preliminary positive electrode active material layer in step S1 may refer to a positive electrode active material layer before overlithiation, and the preliminary positive electrode active material layer may be disposed on the positive electrode collector and may be disposed on one surface or both surfaces of the positive electrode collector.

According to an embodiment of the present invention, the transfer stack 300 may further include a polymer layer 330. Referring to FIG. 2, the polymer layer 330 may be disposed between the base film 310 and the lithium metal layer 320. The polymer layer may play a role in effectively peeling off the lithium metal layer from the transfer stack and allowing the lithium metal layer to be easily transferred to the positive electrode active material layer during the preparation of the positive electrode. That is, the polymer layer may be separated from the transfer stack together with the lithium metal layer to be disposed on the positive electrode active material layer. The polymer layer may exist in contact with the positive electrode active material layer, and alternatively, the lithium metal layer may exist between the polymer layer and the positive electrode active material layer.

The polymer layer may be at least one selected from the group consisting of polyethylene terephthalate (PET), polyimide (PI), poly (methylmethacrylate) (PMMA), polypropylene, polyethylene, and polycarbonate. Accordingly, in a secondary battery including the positive electrode, since the polymer layer may be dissolved in an electrolyte solution contained in the secondary battery, an increase in resistance of the battery may be prevented. Particularly, the polymer layer may include PMMA, and, in this case, the above-described effect may be further improved.

The polymer layer may have a thickness of 0.1 µm to 10 µm, particularly 0.5 µm to 5 µm, and more particularly 1 µm to 2.5 µm. In a case in which the above range is satisfied, the lithium metal layer may be easily transferred to the positive electrode active material layer, and a reverse transfer phenomenon, in which the positive electrode active material layer is transferred to the transfer stack, may be prevented.

According to an embodiment of the present invention, step S1a of the method of preparing a positive electrode is a step of rolling the positive electrode structure.

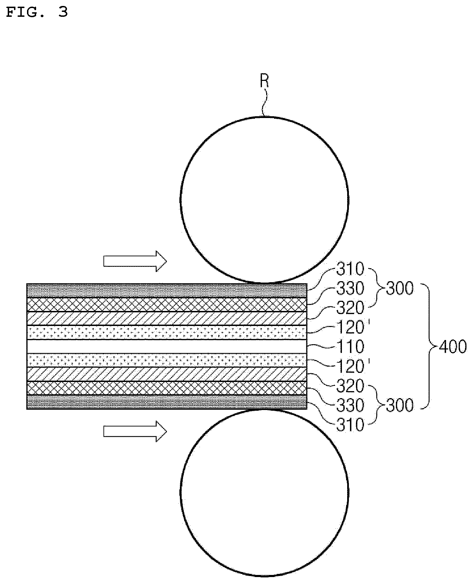

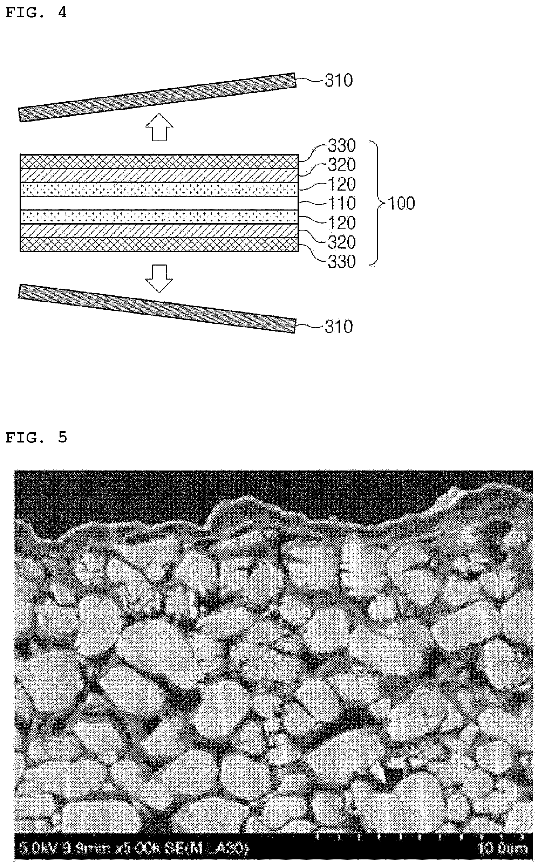

Referring to FIG. 3, in step S1a, the prepared positive electrode structure 400 may be rolled. The rolling may be performed by a roll press method. Specifically, through two rolls R spaced apart from each other with a predetermined space in a vertical direction, a pressure may be applied in the vertical direction to the positive electrode structure 400 passing through the space, and the pressure may be a linear pressure. Through the rolling process, at least a portion of the lithium ions of the lithium metal layer included in the transfer stack may be intercalated into the preliminary positive electrode active material layer. In this process, the preliminary positive electrode active material layer may become a positive electrode active material layer. In FIGS. 3 and 4, it was illustrated that the lithium metal layer is included in the positive electrode, but, in a case in which the entire lithium metal layer is intercalated into the preliminary positive electrode active material layer during the rolling process, the lithium metal layer may not exist as a separate layer.

The pressure applied to the positive electrode structure during the rolling may be in a range of 10 kgf/cm to 90 kgf/cm, particularly, 15 kgf/cm to 80 kgf/cm, and may preferably be 20 kgf/cm or more, 25 kgf/cm or more, or 30 kgf/cm or more, and 70 kgf/cm or less, or 60 kgf/cm or less.

In a case in which the rolling pressure is applied within the above range, the lithium metal layer may be effectively transferred, lithium may be intercalated into the positive electrode at a desired level, and the positive electrode active material particles may be controlled such that they are not cracked while not being exfoliated. Accordingly, an effect, which may satisfy both lifetime improvement and capacity characteristics at the same time, may be achieved.

According to an embodiment of the present invention, step S1b of the method of preparing a positive electrode is a step of preparing a positive electrode by removing the base film from the transfer stack after the rolling.

Referring to FIG. 4, in step S1b, a positive electrode 100 may be prepared by removing the base film 310 from the transfer stack after the rolling performed in step S1a. In a case in which the polymer layer 330 is disposed between the base film 310 and the lithium metal layer 320, the base film 310 may be more easily removed by the polymer layer 330.

Also, according to an embodiment of the present invention, the method of preparing a positive electrode may further include a step S1b' of resting (leaving alone) the preliminary positive electrode for 1 minute to 600 minutes, specifically, 1 minute to 30 minutes. Step S1b' may be performed after step S1a. Specifically, step S1b' may be performed in at least one step of 'between step S1a and step S1b' and 'immediately after step S1b'. Since reaction heat, which has been generated by a reaction of the lithium metal layer and the preliminary positive electrode active material layer in step S1a, may be effectively released by step S1b', lithium is uniformly intercalated into the positive electrode, and thus, there is an effect of reducing the formation of the by-product.

According to an embodiment of the present invention, step S2 is a step of impregnating the prepared positive electrode structure in an electrolyte containing a carbonate-containing solvent. In a case in which lithium is transferred into the positive electrode by impregnating the positive electrode structure in the electrolyte, since time required for overlithiation may be greatly shortened and a phenomenon of exfoliation or cracking of the active material particles may be suppressed, it may significantly contribute to improve lifetime.

In a case in which pre-lithiation is performed on the negative electrode, there is a problem in that it is difficult to prevent the phenomenon of excessive heat generation caused by contact between the negative electrode and the lithium metal layer or ignition phenomenon that occurs during notching or punching the negative electrode no matter which method of the pre-lithiation is performed, and in the case that the pre-lithiation is performed on the negative electrode, since the exfoliation phenomenon of the active material does not occur and time required for lithium to be transferred is not long, advantages of pre-lithiation by the electrolyte impregnation process are not expressed.

However, the present inventors paid attention to the fact that, when overlithiation (pre-lithiation) is performed on the positive electrode, process efficiency is excessively low because the time required for the lithium to be transferred is too long, and the overlithiation of the positive electrode is more difficult in process than the pre-lithiation of the negative electrode due to the active material exfoliation phenomenon that occurs during the transfer, thereby aiming at providing a method of overlithiating the positive electrode using the electrolyte impregnation process.

The method of preparing a positive electrode according to the embodiment of the present invention may solve problems occurring during the overlithiation of the positive electrode by impregnating the positive electrode structure in the electrolyte, particularly the electrolyte that includes the carbonate-containing compound containing the fluorine-containing functional group.

In a case in which the electrolyte impregnation process is used, since overlithiation time may be dramatically shortened and the phenomenon of exfoliation or cracking of the active material particles may be greatly mitigated, lifetime of a lithium secondary battery may be improved.

In general, as a carbonate-containing solvent, for example, propylene carbonate, ethylene carbonate, butylene carbonate, dimethyl carbonate, or diethyl carbonate may be used. In a case in which only the carbonate-containing solvent is used as a solvent of the electrolyte, in some cases, a white layer may be formed on the surface of the positive electrode after the overlithiation, and this may cause an increase in resistance. Thus, the cause of the increase in resistance as described above may be eliminated by using the carbonate-containing compound containing the fluorine-containing functional group, and, accordingly, since it is better to use the carbonate-containing compound containing the fluorine-containing functional group in terms of output improvement and a function of suppressing degradation of the positive electrode and the negative electrode by the carbonate-containing compound containing the fluorine-containing functional group may also be expected, it is desirable to used it together.

The carbonate-containing compound containing the fluorine-containing functional group may include at least one selected from the group consisting of fluoroethylene carbonate, methyl 2,2,2-trifluoro ethyl carbonate, and 2,2,2-trifluoroethyl carbonate, and the carbonate-containing compound containing the carbonate-containing functional group may be included in an amount of 5 wt% to 40 wt%, preferably, 8 wt% or more, or 10 wt% or more based on a total weight of the electrolyte, and may also be included in an amount of 35 wt% or less or 30 wt% or less.

According to an embodiment of the present invention, the electrolyte may further include a lithium salt. The lithium salt is a material that is readily soluble in the non-aqueous electrolyte, wherein, for example, at least one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃-, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

It is desirable that a concentration of the lithium salt in the electrolyte satisfies a range of greater than 0.1 M and equal to or less than 1.0 M. In a case in which the concentration of the lithium salt is within the above range, it may be possible to achieve the effect obtained by the overlithiation through the electrolyte impregnation, and the phenomenon of exfoliation of the active material or poor transfer of lithium may be minimized or prevented. The concentration of the lithium salt may preferably be 0.2 M or more, 0.23 M or more, 0.25 M or more, or 0.3 M or more, and may be 0.95 M or less, 0.9 M or less, or 0.85 M or less.

According to an embodiment of the present invention, at least one additive, for example, a haloalkylene carbonate-containing compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the electrolyte components.

The method of preparing a positive electrode according to the embodiment of the present invention may further include step S3 of washing and drying the positive electrode structure after step S2. After the overlithiation is completed through the electrolyte impregnation of the positive electrode structure, the positive electrode structure may be washed and then dried to form an electrode assembly through assembly with a separator and a negative electrode, and a lithium secondary battery may be prepared by injecting an electrolyte into the electrode assembly. The washing and the drying may be performed by conventional conditions and methods which are known in the art.

### Lithium Secondary Battery

A lithium secondary battery according to an embodiment of the present invention provides a lithium secondary battery including the positive electrode prepared by the above preparation method, a negative electrode, and a separator disposed between the positive electrode and the negative electrode.

Since the method of preparing a positive electrode and the positive electrode have been previously described, descriptions thereof will be omitted.

Also, a lithium secondary battery according to another embodiment of the present invention is characterized in that it includes an electrode assembly that includes a positive electrode including an overlithiated positive electrode active material layer, a negative electrode including silicon (Si) particles as an active material, and a separator disposed between the positive electrode and the negative electrode; a battery case accommodating the electrode assembly; and an electrolyte which is injected into the battery case so as to impregnate the electrode assembly and includes a carbonate-containing compound containing a fluorine-containing functional group, wherein, when an amount of lithium based on a total weight of the positive electrode active material layer of the overlithiated positive electrode, which is measured by inductively coupled plasma optical emission spectroscopy (ICP-OES), is less than 5.0 wt%, an amount of the carbonate-containing compound containing the fluorine-containing functional group based on a total weight of the electrode assembly and the electrolyte, which is measured by inductively coupled plasma optical emission spectroscopy (ICP-OES), is 3.5 wt% or more.

Herein, the amount of the lithium in the overlithiated positive electrode active material layer and the amount of the carbonate-containing compound containing the fluorine-containing functional group in the electrode assembly and the electrolyte may be measured by inductively coupled plasma optical emission spectroscopy (ICP-OES).

As described above, the overlithiated positive electrode is a positive electrode which has been subjected to the overlithiation including the process of impregnating the positive electrode in the electrolyte in which the carbonate-containing compound containing the fluorine-containing functional group is included, wherein it is characterized in that an active material layer containing silicon particles as an active material is formed in the negative electrode, and it is characterized in that the carbonate-containing compound containing the fluorine-containing functional group, which has been used during the overlithiation, is included in the electrolyte. Since these features are simultaneously used, a lithium secondary battery, which satisfies that the amount of the carbonate-containing compound containing the fluorine-containing functional group in the electrolyte is 3.5 wt% or more based on the total weight of the electrolyte when the amount of the lithium based on the total weight of the positive electrode active material layer in the overlithiated positive electrode is less than 5.0 wt%, may be provided.

The fact that the amount of the lithium is less than 5.0 wt% means that repetitive cycling has progressed for a fairly long period of time, wherein it may mean that degradation of the lithium secondary battery has progressed to some extent. According to an embodiment of the present invention, it is characterized in that the amount of the carbonate-containing compound containing the fluorine-containing functional group in the electrolyte is 3.5 wt% or more based on the total weight of the electrolyte even after the lithium secondary battery has significantly degraded.

The carbonate-containing compound containing the fluorine-containing functional group may be included as an additive or solvent in the electrolyte, wherein most of them are lost due to a side reaction during cycle operation and, after the degradation has progressed to a significant extent, a residual amount may be considerably small, that is, the amount may be significantly small in a case in which cycles proceed until the amount of the lithium in the positive electrode is decreased to less than 5.0 wt%. However, in the case that the positive electrode according to the embodiment of the present invention, that is, the overlithiated positive electrode is used, since a stable film is formed on the surface, a loss due to the side reaction on the surface of the positive electrode or an amount consumed for film formation is insignificant, and thus, it may prevent a sudden drop in capacity by remaining in the electrolyte for a long period of time.

For example, the amount of the carbonate-containing compound containing the fluorine-containing functional group may be 3.5 wt% or more based on the total weight of the electrode assembly and the electrolyte, and may preferably be 4.0 wt% or more, 4.5 wt% or more, 5.0 wt% or more, 5.3 wt% or more, or 5.5 wt% or more. Also, the amount of the carbonate-containing compound containing the fluorine-containing functional group may preferably be 15.0 wt% or less, 10.0 wt% or less, or 9.0 wt% or less.

As described above, the carbonate-containing compound containing the fluorine-containing functional group is generally used in an amount range of about 5 wt% to 40 wt% in the electrolyte, and the 40 wt% may be the maximum amount that may be included. That is, even if the carbonate-containing compound containing the fluorine-containing functional group is included in the maximum amount, it is continuously consumed during cycle operation and the sudden drop in capacity may occur after a certain point when the residual amount almost disappears.

However, with respect to the lithium secondary battery according to the embodiment of the present invention, since an SEI film is formed in advance on the surface and internal pores of the positive electrode through the carbonate-containing compound containing the fluorine-containing functional group and the compound is allowed to remain by using the overlithiated positive electrode, for example, the positive electrode subjected to the overlithiation using the carbonate-containing compound containing the fluorine-containing functional group, a consumed amount of the carbonate-containing compound containing the fluorine-containing functional group from the electrolyte may be reduced as much as possible and accordingly, degradation of the negative electrode as well as the degradation of the positive electrode may be suppressed, and thus, the sudden drop in capacity and a problem of a rapid increase in resistance may be prevented.

The above-described range may be achieved when using the combination as described above, wherein, in this case, even if the already-formed SEI film of the positive electrode is lost, since it may be supplemented by the remaining carbonate-containing compound containing the fluorine-containing functional group, an effect of maintaining long lifetime may be expected.

Furthermore, a lithium secondary battery according to another embodiment of the present invention is characterized in that it includes an electrode assembly that includes an overlithiated positive electrode including an overlithiated positive electrode active material layer, a negative electrode including silicon (Si) particles as an active material, and a separator disposed between the positive electrode and the negative electrode; a battery case accommodating the electrode assembly; and an electrolyte which is injected into the battery case so as to impregnate the electrode assembly and includes a carbonate-containing compound containing a fluorine-containing functional group, wherein, when an amount of the carbonate-containing compound containing the fluorine-containing functional group based on a total weight of the electrode assembly and the electrolyte, which is measured by inductively coupled plasma optical emission spectroscopy (ICP-OES), is 8.0 wt% or less, an amount of lithium based on a total weight of the positive electrode active material layer of the overlithiated positive electrode, which is measured by inductively coupled plasma optical emission spectroscopy (ICP-OES), is 3.0 wt% or more.

Preferably, the amount of the lithium may be 3.5 wt% or more, 4.0 wt% or more, 4.5 wt% or more, or 5.0 wt% or more.

That is, in the lithium secondary battery according to the embodiment of the present invention, since a large amount of the lithium remains in the positive electrode even after long-term cycle operation and a large amount of the carbonate-containing compound containing the fluorine-containing functional group also remains in the electrolyte, the lithium moving between the positive electrode and the negative electrode may exist in abundance for a long period of time and the carbonate-containing compound containing the fluorine-containing functional group, which may prevent the side reaction and degradation, is also abundant, and thus, an effect of increasing the lifetime may be greatly achieved due to excellent capacity retention and resistance increase rate of the lithium secondary battery.

The negative electrode includes a negative electrode active material layer, the negative electrode active material layer may include a negative electrode active material, and a silicon-containing negative electrode active material, a carbon-based negative electrode active material, or a combination thereof may be used as the negative electrode active material.

The negative electrode active material may include a silicon-containing negative electrode active material. The silicon-containing negative electrode active material may include at least one of Si and SiOₓ (0<x<2).

The Si is silicon particles, wherein it may be silicon particles (particles formed of silicon), so-called Pure Silicon. The silicon particles may effectively improve the capacity of the negative electrode. The SiOₓ (0<x<2) may be in a form including Si and SiO₂, and the Si may constitute a phase. That is, x corresponds to a number ratio of oxygen (O) to Si included in the SiOₓ (0<x<2). In a case in which the silicon-containing composite particle includes the SiOₓ (0<x<2), discharge capacity of the secondary battery may be improved.

According to an embodiment of the present invention, the silicon-containing negative electrode active material, particularly, the silicon (Si) particles has a problem of extremely poor life characteristics due to extreme volume changes during battery operation, but, in a case in which it is combined with the positive electrode according to the present invention, since excess lithium ions, not lithium in the positive electrode active material which determines capacity, are transferred to the silicon (Si) negative electrode active material when activated from the overlithiated positive electrode to react with the silicon (Si) particles in advance, an irreversible phase is formed to reduce the available region, and, accordingly, the volume changes during battery operation are not severe so that the lifetime may be significantly improved and high capacity characteristics, which are inherent characteristics of the silicon-containing negative electrode active material, may be sufficiently achieved.

According to an embodiment of the present invention, the negative electrode active material may further include a carbon-based negative electrode active material. The carbon-based negative electrode active material may include at least one selected from the group consisting of artificial graphite, natural graphite, and graphitized meso-carbon microbeads.

According to an embodiment of the present invention, the negative electrode active material layer may further include a negative electrode binder. The negative electrode binder may include at least one selected from the group consisting of polyvinylidene fluoride-hexafluoropropylene copolymer (PVDF-co-HFP), polyvinylidene fluoride, polyacrylonitrile, polymethylmethacrylate, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, polyacrylate, an ethylene-propylene-diene monomer (EPDM), a sulfonated EPDM, a styrene-butadiene rubber (SBR), a fluorine rubber, poly acrylic acid, and a material having hydrogen thereof substituted with lithium (Li), sodium (Na), or calcium (Ca), or may include various copolymers thereof.

According to an embodiment of the present invention, the negative electrode active material layer may further include a negative electrode conductive agent. The negative electrode conductive agent is not particularly limited as long as it has conductivity without causing adverse chemical changes in the battery, and, for example, a conductive material such as: graphite such as natural graphite or artificial graphite; carbon black such as acetylene black, Ketjen black, channel black, furnace black, lamp black, and thermal black; conductive fibers such as carbon fibers or metal fibers; conductive tubes such as carbon nanotubes; metal powder such as fluorocarbon powder, aluminum powder, and nickel powder; conductive whiskers such as zinc oxide whiskers and potassium titanate whiskers; conductive metal oxide such as titanium oxide; or polyphenylene derivatives may be used.

According to an embodiment of the present invention, the lithium secondary battery includes the separator. The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions is preferable. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer material may be used to secure heat resistance or mechanical strength, and the separator having a single layer or multilayer structure may be optionally used.

According to an embodiment of the present invention, the lithium secondary battery may further include an electrolyte. In this case, the electrolyte may be the same as or different from the electrolyte used during the overlithiation, and the electrolytes may be used independently of each other. The electrolyte may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include a non-aqueous organic solvent and a metal salt. As the non-aqueous organic solvent, the carbonate-containing compound containing the fluorine-containing functional group is included, and additionally, for example, aprotic organic solvents, such as N-methyl-2-pyrrolidone, propylene carbonate, ethylene carbonate, butylene carbonate, dimethyl carbonate, diethyl carbonate, γ-butyrolactone, 1,2-dimethoxy ethane, tetrahydrofuran, 2-methyl tetrahydrofuran, dimethyl sulfoxide, 1,3-dioxolane, formamide, diemthylformamide, dioxolane, acetonitrile, nitromethane, methyl formate, methyl acetate, phosphate triester, trimethoxy methane, a dioxolane derivative, sulfolane, methyl sulfolane, 1,3-dimethyl-2-imidazolidinone, a propylene carbonate derivative, a tetrahydrofuran derivative, ether, methyl propionate, and ethyl propionate, may be used.

Particularly, since ethylene carbonate and propylene carbonate, ring-type carbonates among the carbonate-containing organic solvents, well dissociate a lithium salt in the electrolyte solution due to high dielectric constants as high-viscosity organic solvents, the ring-type carbonate may be preferably used, and, since an electrolyte solution having high electrical conductivity may be prepared when the ring-type carbonate is mixed with low-viscosity, low-dielectric constant linear carbonate, such as dimethyl carbonate and diethyl carbonate, in an appropriate ratio, the ring-type carbonate may be more preferably used.

A lithium salt may be used as the metal salt, and the lithium salt is a material that is readily soluble in the non-aqueous electrolyte, wherein, for example, at least one selected from the group consisting of F⁻, Cl⁻, I⁻, NO₃⁻, N(CN)₂⁻, BF₄⁻, ClO₄⁻, PF₆⁻, (CF₃)₂PF₄⁻, (CF₃)₃PF₃⁻, (CF₃)₄PF₂⁻, (CF₃)₅PF⁻, (CF₃)₆P⁻, CF₃SO₃⁻, CF₃CF₂SO₃-, (CF₃SO₂)₂N⁻, (FSO₂)₂N⁻, CF₃CF₂(CF₃)₂CO⁻, (CF₃SO₂)₂CH⁻, (SF₅)₃C⁻, (CF₃SO₂)₃C⁻, CF₃(CF₂)₇SO₃⁻, CF₃CO₂⁻, CH₃CO₂⁻, SCN⁻, and (CF₃CF₂SO₂)₂N⁻ may be used as an anion of the lithium salt.

At least one additive, for example, a haloalkylene carbonate-containing compound such as difluoroethylene carbonate, pyridine, triethylphosphite, triethanolamine, cyclic ether, ethylenediamine, n-glyme, hexaphosphoric triamide, a nitrobenzene derivative, sulfur, a quinone imine dye, N-substituted oxazolidinone, N,N-substituted imidazolidine, ethylene glycol dialkyl ether, an ammonium salt, pyrrole, 2-methoxy ethanol, or aluminum trichloride, may be further included in the electrolyte in addition to the above-described electrolyte components for the purpose of improving the life characteristics of the battery, suppressing a decrease in battery capacity, and improving discharge capacity of the battery.

As described above, since the secondary battery including the positive electrode according to the present invention stably exhibits excellent capacity and capacity retention, the secondary battery is suitable for portable devices, such as mobile phones, notebook computers, and digital cameras, and electric cars such as hybrid electric vehicles (HEVs).

Accordingly, according to another embodiment of the present invention, a battery module including the secondary battery as a unit cell and a battery pack including the battery module are provided.

The battery module and the battery pack may be used as a power source of at least one medium and large sized device selected from a power tool; an electric vehicle (EV); a hybrid electric vehicle; a plug-in hybrid electric vehicle (PHEV); or a power storage system.

### Examples

Hereinafter, preferred examples will be provided for better understanding of the present invention. It will be apparent to those skilled in the art that these examples are only provided to illustrate the present invention and various modifications and alterations are possible within the scope and technical spirit of the present invention. Such modifications and alterations fall within the scope of claims included herein.

### Electrode Preparation

### Example 1-1: Preparation of Positive Electrode

A transfer stack, which included a PET film (base film), a polymer layer (2.5 µm thick) disposed on the PET film and formed of PMMA, and a lithium metal layer (6.0 µm thick, loading amount of 0.62 mAh/cm²) disposed on the polymer layer and formed of solid-phase lithium metal, was prepared.

Li[Ni_{0.86}Co_{0.05}Mn_{0.08}Al_{0.01}]O₂ was used as a positive electrode active material. The positive electrode active material was in a form of a secondary particle in which a plurality (10 or more) of Li[Ni_{0.86}Co_{0.05}Mn_{0.08}Al_{0.01}]O₂ primary particles were bonded to each other, and an average particle diameter D₅₀ of the secondary particles was 9 µm. A positive electrode, which included a preliminary positive electrode active material layer including the positive electrode active material, PVdF as a positive electrode binder, and carbon nanotubes, as a positive electrode conductive agent, at a weight ratio of 98:1:1 and an aluminum foil (thickness: 6 µm) as a positive electrode collector, was prepared. The preliminary positive electrode active material layer had a loading amount of 4.5 mAh/cm² and a thickness of 140 µm.

The transfer stack was disposed on the preliminary positive electrode active material layer to allow the lithium metal layer to be in contact with the preliminary positive electrode active material layer.

Thereafter, after the positive electrode having the transfer stack disposed thereon was rolled at a pressure of 50 kgf/cm by a roll press method, the positive electrode structure was impregnated in an electrolyte (solvent: fluoroethylene carbonate (FEC) and diethylene carbonate (DEC) in a weight ratio of 3:7, lithium salt: LiPF₆ and LiFSI, and additives: vinylene carbonate (VC), propylene carbonate (PC), and 1,3-propenesultone (PRS)) with a concentration of 0.2 M. Through this, lithium ions of the lithium metal layer were intercalated into the preliminary positive electrode active material layer to form a positive electrode active material layer. Thereafter, the base film was removed and the rolled positive electrode was left standing for 10 minutes to prepare a positive electrode including the positive electrode collector, the positive electrode active material layer, and the polymer layer.

### Example 1-2: Preparation of Positive Electrode

A positive electrode was prepared in the same manner as in Example 1-1 except that the concentration of the electrolyte in which the positive electrode structure was impregnated was 0.3 M.

### Example 1-3: Preparation of Positive Electrode

A positive electrode was prepared in the same manner as in Example 1-1 except that the concentration of the electrolyte in which the positive electrode structure was impregnated was 0.5 M.

### Example 1-4: Preparation of Positive Electrode

A positive electrode was prepared in the same manner as in Example 1-1 except that the concentration of the electrolyte in which the positive electrode structure was impregnated was 0.7 M.

### Example 1-5: Preparation of Positive Electrode

A positive electrode was prepared in the same manner as in Example 1-1 except that the concentration of the electrolyte in which the positive electrode structure was impregnated was 1.0 M.

### Example 1-6: Preparation of Positive Electrode

A positive electrode was prepared in the same manner as in Example 1-5 except that the lithium metal layer had a thickness of 3 µm.

### Comparative Example 1-1: Preparation of Positive Electrode

A positive electrode was prepared in the same manner as in Example 1-1 except that the positive electrode was not impregnated in the electrolyte after the rolling, but was left standing for 24 hours.

### Comparative Example 1-2: Preparation of Positive Electrode

A positive electrode was prepared in the same manner as in Example 1-6 except that the positive electrode was not impregnated in the electrolyte after the rolling, but was left standing for 24 hours.

### Comparative Example 1-3: Preparation of Negative Electrode

A transfer stack, which included a PET film (base film), a polymer layer (1 µm thick) disposed on the PET film and formed of PMMA, and a lithium metal layer (3 µm thick, loading amount of 0.6 mAh/cm²) disposed on the polymer layer and formed of solid-phase lithium metal, was prepared.

Silicon particles having an average particle diameter D₅₀ of 5 µm was used as a negative electrode active material. A negative electrode, which included a preliminary negative electrode active material layer including the negative electrode active material, carboxymethylcellulose (CMC) as a negative electrode binder, and carbon nanotubes, as a negative electrode conductive agent, at a weight ratio of 80:10:10, was prepared. The preliminary negative electrode active material layer had a loading amount of 10 mAh/cm² and a thickness of 75 µm.

The transfer stack was disposed on the preliminary negative electrode active material layer to allow the lithium metal layer to be in contact with the preliminary negative electrode active material layer.

Thereafter, electrolyte impregnation, washing, and drying were performed in the same manner as in Example 1-1 to prepare a negative electrode.

### Comparative Example 1-4: Preparation of Positive Electrode

A positive electrode was prepared in the same manner as in Example 1-5 except that the solvent of the electrolyte in which the positive electrode structure was impregnated was replaced with ethylene carbonate and ethylmethyl carbonate, LiFSI was excluded from the lithium salt, and LiPF₆ was used as the lithium salt.

### Experimental Example 1: Overlithiation Reaction and Physical Property Evaluation of the Positive Electrode

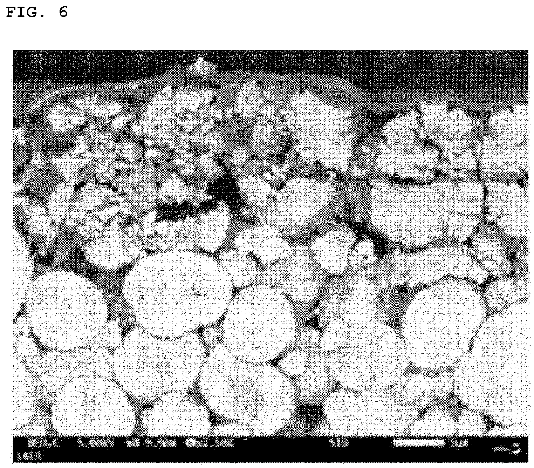

Cross sections of the positive electrodes of Example 1-5 and Comparative Example 1-2 were imaged at a magnification of x500 with a scanning electron microscope (SEM, JEOL Ltd., JSM-7200F), and the images are illustrated in FIGS. 5 and 6.

Referring to the cross section of the positive electrode of Example 1-5 in FIG. 5, it may be confirmed that almost no cracks occurred in active material particles, but, referring to FIG. 6 as the cross-sectional image of the positive electrode of Comparative Example 1-2, it may be confirmed that quite a lot of cracks were observed in active material particles near a surface.

Also, in Comparative Example 1-1, the lithium metal layer had a thickness of 6 µm which was thicker than that in Comparative Example 1-2, wherein a phenomenon was also observed in which a portion of the lithium metal layer was exfoliated from the electrode during an overlithiation reaction.

For the overlithiation reactions of Examples 1-1 to 1-6 and Comparative Examples 1-1 to 1-3, peak temperature of the reaction, time to reach the peak temperature, and total overlithiation reaction time were measured and presented in Table 1 below.

**[Table 1]**

| | Peak temperature (°C) | Time to reach the peak temperature (s) | Overlithiat ion reaction time (min) | Whether cracks occurred or not |
|---|---|---|---|---|
| Example 1-1 | 29.1 | 141 | 4.0 | X |
| Example 1-2 | 31.1 | 75 | 3.2 | X |
| Example 1-3 | 33.2 | 70 | 2.4 | X |
| Example 1-4 | 35.0 | 40 | 2.2 | X |
| Example 1-5 | 37.0 | 31 | 1.5 | X |
| Example 1-6 | 36.8 | 30 | 1.6 | X |
| Comparative Example 1-1 | 25.7 | 45 | 1440 or more | ○ |
| Comparative Example 1-2 | 24.9 | 58 | 360 or more | ○ |
| Comparative Example 1-3 | ~60 | ~10 | ~1 | - |
| Comparative Example 1-4 | 28.4 | 80 | 3.5 | X |

Referring to Table 1, with respect to Examples 1-1 to 1-6 which were subjected to overlithiation through the electrolyte impregnation, it may be confirmed that time required for the overlithiation was significantly shortened in comparison to a case where the electrolyte impregnation was not performed. Also, since pre-lithiation through the electrolyte impregnation, which was performed on the negative electrode as in Comparative Example 1-3, increased the temperature to 60°C in 10 seconds, the reaction may not proceed further. That is, with respect to the negative electrode, since the reaction occurred explosively, it may be confirmed that it was not possible to apply the pre-lithiation through this method.

### Preparation of Secondary Batteries

### Example 2-1: Preparation of Secondary Battery

Silicon (Si) particles having an average particle diameter D₅₀ of 5 µm was used as a negative electrode active material. A negative electrode, which included a preliminary negative electrode active material layer including the negative electrode active material, carboxymethylcellulose (CMC) as a negative electrode binder, and carbon nanotubes, as a negative electrode conductive agent, at a weight ratio of 80:10:10, was prepared. The preliminary negative electrode active material layer had a loading amount of 10 mAh/cm² and a thickness of 75 µm.

The positive electrode of Example 1-1, the negative electrode, and a porous polyethylene separator were assembled using a winding method, and a preliminary lithium ion secondary battery was prepared by injecting an electrolyte (solvent: fluoroethylene carbonate (FEC) and diethylene carbonate (DEC) in a weight ratio of 3:7, lithium salt: LiPF₆ and LiFSI, and additives: vinylene carbonate (VC), propylene carbonate (PC), and 1,3-propenesultone (PRS)) into the assembled battery.

The preliminary lithium ion secondary battery was charged at a C-rate of 0.1 C to 4.2 V and then discharged to 2.5 V to perform a formation process.

### Examples 2-2 to 2-6: Preparation of Secondary Batteries

Lithium secondary batteries of Examples 2-2 to 2-6 were prepared in the same manner as in Example 2-1 except that the positive electrodes of Examples 1-2 to 1-6 were respectively used instead of the positive electrode of Example 1-1.

### Comparative Examples 2-1, 2-2, and 2-4: Preparation of Secondary Batteries

Lithium secondary batteries of Comparative Examples 2-1, 2-2, and 2-4 were prepared in the same manner as in Example 2-1 except that the positive electrodes of Comparative Examples 1-1, 1-2, and 1-4 were respectively used instead of the positive electrode of Example 1-1.

### Experimental Example 2: Resistance Characteristics Evaluation

Resistance of each of the lithium secondary batteries of Example 2-5 and Comparative Examples 2-1 and 2-4 was measured in the following manner.

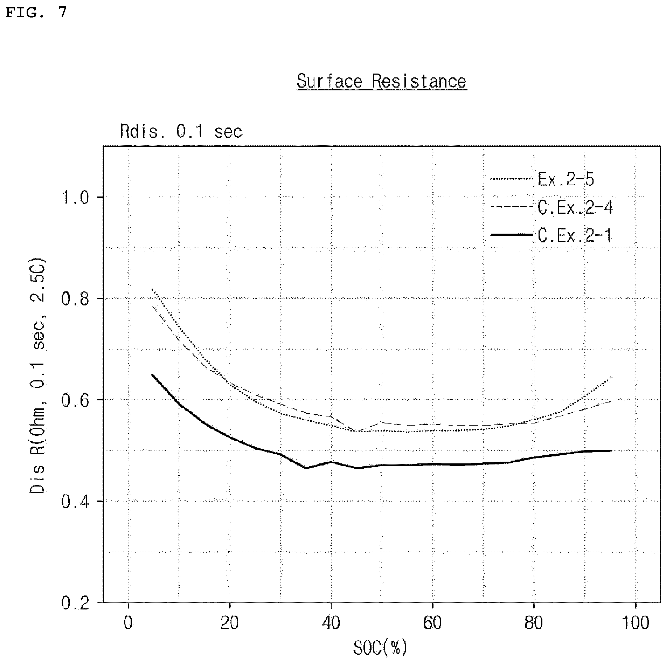

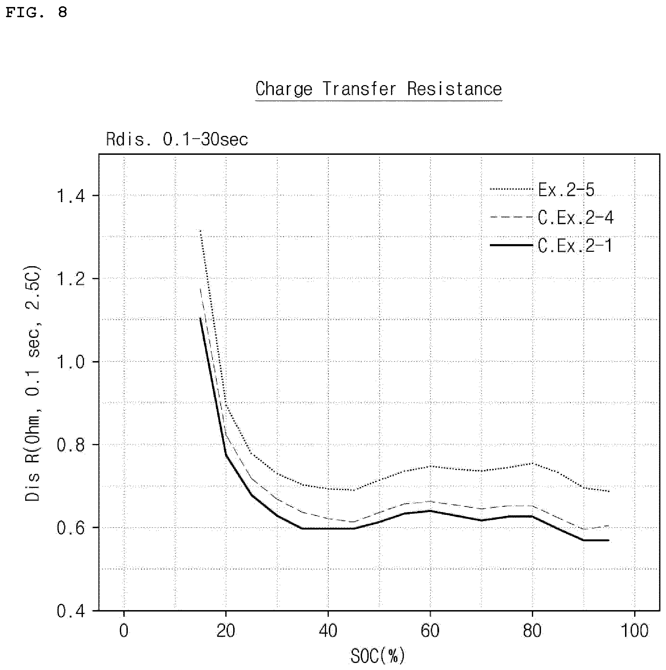

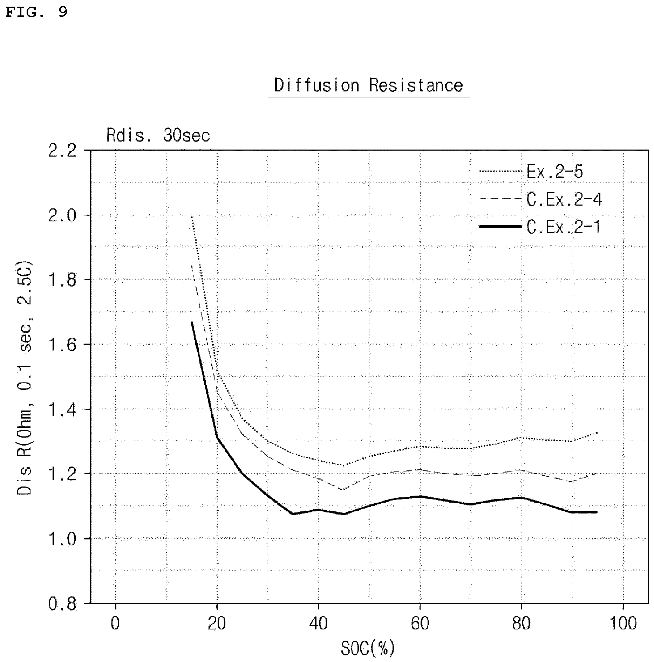

After charging and discharging the lithium secondary battery, while the lithium secondary battery was fully charged and then discharged again, a 2.5 C pulse current was applied for a certain time according to changes in state of charge (SOC) to measure surface resistance (0.1 second resistance), charge transfer resistance (0.1 to 30 second resistance), and diffusion resistance (30 second resistance), and the results thereof are presented in Table 2 and FIGS. 7 to 9.

**[Table 2]**

| | | | |
|---|---|---|---|
| | Surface resistance (ohm) | Charge transfer resistance (ohm) | Diffusion resistance (ohm) |
| Example 2-5 | 0.54 | 0.64 | 1.19 |
| Comparative Example 2-1 | 0.47 | 0.63 | 1.10 |
| Comparative Example 2-4 | 0.56 | 0.71 | 1.25 |

Referring to Table 2 and FIGS. 7 to 9, since a film formed on the surface by the electrolyte impregnation acted as resistance, it may be confirmed that resistance of Example 2-5 was slightly increased in comparison to those of Comparative Examples 2-1 and 2-4. However, it may be understood that a degree of resistance increase was insignificant compared to the time required for the overlithiation, and, since Example 2-5 using the fluorine-based electrolyte was at an almost equivalent level to that of the case where the electrolyte impregnation was not performed, it may be predicted that there will be no substantial performance degradation due to the resistance increase.

### Experimental Example 3: Positive Electrode and Electrolyte Analysis After Cycles

After a total of 550 cycles was performed on the lithium secondary batteries of Examples 2-1 to 2-6 and Comparative Examples 2-1, 2-2, and 2-4 in which the lithium secondary batteries were charged and discharged at 0.1 C in a first cycle and a second cycle and were charged and discharged at 0.5 C from a third cycle, each lithium secondary battery was disassembled, and surface X-ray photoelectron spectroscopy (XPS) analysis and lithium content analysis of the positive electrode and component analysis of the electrolyte were performed by the following methods.
1) Positive electrode surface XPS analysis: C 1s spectrum, O 1s spectrum, and F 1s spectrum were obtained by using X-ray photoelectron spectroscopy (XPS) (Nexsa ESCA System, Thermo Fisher Scientific (ESCA-02)) under conditions including an Al-Kα (1486.6 eV) light source, an acceleration voltage of 1 kV/300 W, an energy resolution of about 1.0 eV, a minimum analysis area of 400 micro, and a sputter rate of 0.13 nm/min, and an intensity value of each peak is listed in Table 3 below. Herein, the peak intensity value is a value derived from the measurement instrument, wherein it has no unit and is a value indicating a relative intensity of the peak according to binding energy.
2) Analysis of lithium content (wt%) in the positive electrode: After cycling the lithium secondary batteries of Examples 2-1 to 2-6 and Comparative Examples 2-1, 2-2, and 2-4, each lithium secondary battery was disassembled and the positive electrode excluding the current collector was powdered. After 0.02 g of the above positive electrode powder was added to a mixed solution of 3.0 mL of hydrochloric acid and 0.5 mL of hydrogen peroxide and heated to be completely dissolved, 500 µL of 1,000 mg/kg internal STD (Sc) was added and diluted to 50 mL with ultrapure water to prepare a measurement sample. For the measurement sample, a ratio of wavelengths corresponding to a lithium element was analyzed using inductively coupled plasma optical emission spectroscopy (ICP-OES, Perkin Elimner Inc.).
3) Electrolyte component (wt%) analysis: After the lithium secondary batteries of Examples 2-1 to 2-6 and Comparative Examples 2-1 and 2-2 were cycled and then disassembled and the entire disassembled lithium secondary battery was put into a mixed solution of hydrochloric acid and hydrogen peroxide to sufficiently dissolve residual compounds deposited on the electrode assembly and the battery case, 3.5 mL of the above solution was collected, and 500 µL of 1,000 mg/kg Internal STD (Sc) was added and diluted to 50 mL with ultrapure water to prepare a measurement sample. Thereafter, a compound content was analyzed using the inductively coupled plasma optical emission spectroscopy (ICP-OES, Perkin Elimner Inc.).

**[Table 3]**

| | | Examp le 2-1 | Examp le 2-2 | Examp le 2-3 | Examp le 2-4 | Examp le 2-5 | Examp le 2-6 | Compa rativ e | Compa rativ e | Compa rativ e |
|---|---|---|---|---|---|---|---|---|---|---|
| | | | | | | | | Examp le 2-1 | Examp le 2-2 | Examp le 2-4 |
| C 1s | I_{C1} (284~2 86 eV) | 4.15 | 4.22 | 4.31 | 4.38 | 4.49 | 4.68 | 3.45 | 3.68 | 4.32 |
| | I_{C2} (288~2 92 eV) | 2.55 | 2.36 | 2.24 | 2.03 | 1.92 | 1.73 | 4.04 | 3.83 | 2.25 |
| | I_{C2}/I_{C1} | 0.61 | 0.56 | 0.52 | 0.46 | 0.43 | 0.37 | 1.17 | 1.04 | 0.52 |
| O 1s | I_{O1} (531~5 33 eV) | 3.75 | 3.69 | 3.62 | 3.51 | 3.45 | 3.32 | 4.49 | 4.27 | 3.65 |
| F 1s | I_{F1} (684~06 86 eV) | 4.03 | 4.18 | 4.22 | 4.37 | 4.48 | 4.25 | 1.78 | 0.00 | 1.81 |
| | I_{F2} (687~06 89 eV) | 2.25 | 2.11 | 1.98 | 1.85 | 1.79 | 2.03 | 3.81 | 3.78 | 3.78 |
| | I_{E2}/I_{E1} | 0.56 | 0.50 | 0.47 | 0.42 | 0.40 | 0.48 | 2.14 | - | 2.09 |
| Elect rolyt e compo nents (wt%) | FEC | 5.5 | 6.1 | 6.4 | 6.9 | 7.3 | 6.2 | 1 | 1.5 | - |
| | DEC | 69.7 | 69.1 | 68.8 | 68.5 | 68 | 68.9 | 74.8 | 74.3 | - |
| | LiFSI | 6.3 | 6.4 | 6.4 | 6.3 | 6.4 | 6.4 | 6.7 | 6.6 | - |
| | LiPF₆ | 18.3 | 18.4 | 18.4 | 18.3 | 18.3 | 18.5 | 17.5 | 17.4 | - |
| Lithi um conte nt (wt%) | Initia l | 9.8 | 9.8 | 9.9 | 10 | 10.2 | 9.9 | 11.1 | 10.8 | 10.6 |
| | After 550 cycles | 3.6 | 4 | 4.1 | 4.2 | 4.8 | 3.8 | 2.6 | 1.8 | 1.5 |

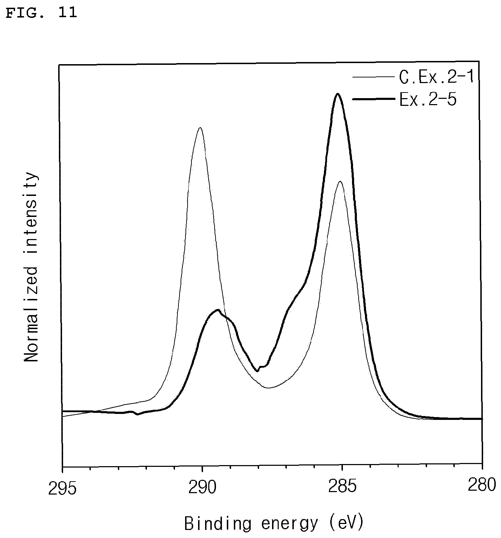

Referring to Table 3 and FIGS. 11 to 13, it may be confirmed that a difference between the example and the comparative example was clearly distinguished from C 1s spectrum and F 1s spectrum results. With respect to Examples 2-1 to 2-6, from the fact that I_{C2} values were lower than those of the comparative examples and I_{C2} had a lower value than I_{C1}, it may be confirmed that a carbonate-containing by-product may rather be reduced on the surface of the positive electrode by applying the electrolyte impregnation using the fluorine-containing carbonate-containing compound during the overlithiation of the positive electrode, and typically, the above-described difference may be confirmed through FIG. 11 which illustrates the XPS results of Example 2-5 and Comparative Example 2-1.

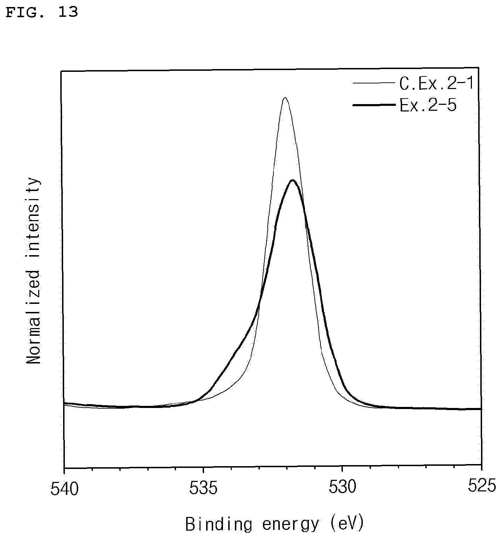

Also, values of I_{O1} of the examples were also lower than those of the comparative examples, wherein this may ultimately confirm that less carbonate-containing by-products were formed, and their difference may be confirmed through FIG. 13 which typically illustrates XPS results of Example 2-5 and Comparative Example 2-1.

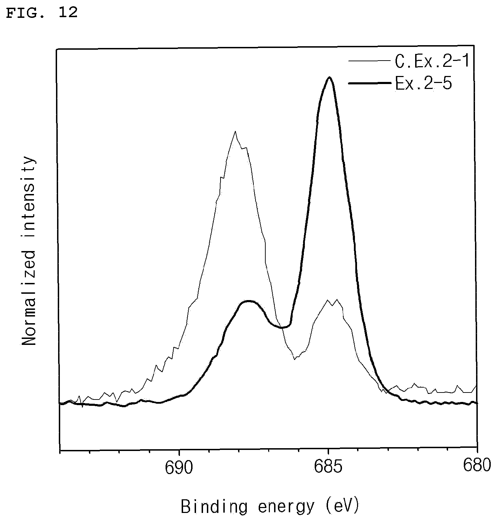

Furthermore, with respect to I_{F2} and I_{F1}, from the fact that I_{F2} was also lower than I_{F1} and I_{F2} values of the examples were lower than those of the comparative examples, in a case in which overlithiation is performed using the electrolyte containing the fluorine-containing carbonate compound, it may be understood that a film containing LiF was well formed on the surface of the positive electrode and formation of other by-products was rather prevented by the electrolyte impregnation, and this may be similarly confirmed through FIG. 12 which typically illustrates XPS results of Example 2-5 and Comparative Example 2-1. For reference, lithium remaining on the surface reacted with the fluorine-containing carbonate compound to generate LiF as the positive electrode was overlithiated, wherein, with respect to Comparative Example 2-2, since an amount of lithium used in the overlithiation was small, there was no lithium, which completely penetrated into the positive electrode and remained on the surface, until the electrode assembly was assembled and then impregnated in the electrolyte, and thus, it may be confirmed that LiF was not detected.

### Experimental Example 4: Capacity Retention and Resistance Increase Rate Evaluation

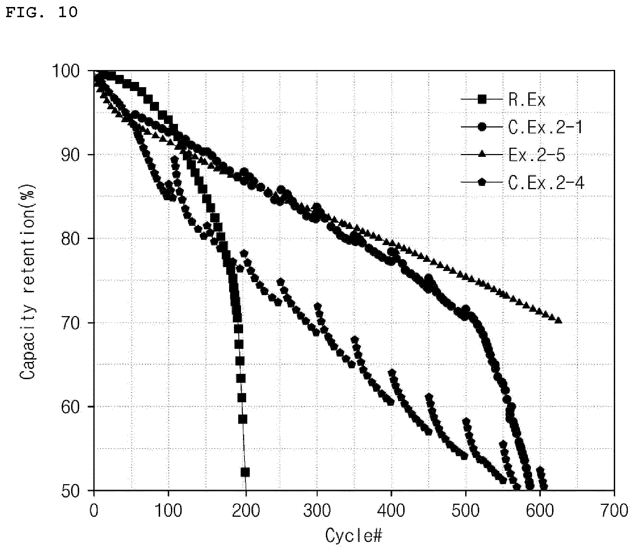

Each of the lithium secondary batteries of Examples 2-1 to 2-6 and Comparative Examples 2-1, 2-2, and 2-4 and a lithium secondary battery of Reference Example, which was prepared in the same manner as in Example 2-5 except that overlithiation (lithium transfer and electrolyte impregnation) was not performed, was charged and discharged to measure capacity and resistance of each secondary battery for each cycle using the following method, capacity retention and resistance increase rate were calculated as follows, and the results thereof are presented in Table 3 and FIG. 10 below.
* Capacity retention and resistance increase rate: Each secondary battery was charged and discharged at 0.1 C in a first cycle and a second cycle, and was charged and discharged at 0.5 C from a third cycle.
   Charging conditions: CC(constant current)/CV (constant voltage) (5 mV/0.005 C current cut-off) 4.2 V
   Discharging conditions: CC(constant current) condition 3.27 V
   Capacity retention (%) = (Nth discharge capacity/initial discharge capacity) × 100
   Resistance increase rate (%) = [(Nth discharge resistance/initial discharge resistance)-1] × 100

**[Table 4]**

| | 200^{th} cycle | | 550^{th} cycle | | 600^{th} cycle | |
|---|---|---|---|---|---|---|
| | Capacit y retenti on (%) | Resista nce increas e rate (%) | Capacit y retenti on (%) | Resista nce increas e rate (%) | Capacit y retenti on (%) | Resista nce increas e rate (%) |
| Example 2-1 | 86 | 6 | 69 | 78 | 59 | 126 |
| Example 2-2 | 87 | 5 | 71 | 71 | 61 | 111 |
| Example 2-3 | 87 | 5 | 73 | 63 | 66 | 95 |
| Example 2-4 | 87 | 5 | 74 | 59 | 68 | 81 |
| Example 2-5 | 87 | 5 | 74 | 59 | 72 | 71 |
| Example 2-6 | 87 | 5 | 68 | 81 | 60 | 125 |
| Comparative Example 2-1 | 88 | 23 | 62 | 133 | 46 | 193 |
| Comparative Example 2-2 | 88 | 20 | 59 | 157 | 41 | 236 |
| Comparative | 86 | 6 | 65 | 101 | 50 | 186 |
| Example 2-4 | | | | | | |

Referring to Table 4 and FIG. 10, with respect to Reference Example using a non-overlithiated positive electrode, it may be confirmed that capacity began to decrease rapidly after 200 cycles, but it may be confirmed that capacities of Examples 2-1 to 2-6 and Comparative Example 2-1, which were subjected to the overlithiation, were maintained at a constant level even in subsequent cycles. Also, in a case in which the overlithiation was performed using the transfer stack as in Comparative Example 2-1, a better capacity retention than that of Example 2-6 was exhibited until about 300 cycles, but capacity was rapidly decreased after 500 cycles. However, with respect to Examples 2-1 to 2-6 in which the overlithiation was performed by impregnation with the electrolyte including the fluorine-containing carbonate-containing compound, it may be confirmed that capacity retentions were consistently maintained at an excellent level even after 500 cycles.

Furthermore, referring to Table 3, it may be confirmed that the resistance increase rates show a clear difference in effect between the secondary batteries of the examples and the secondary batteries of the comparative examples. A difference in resistance increase began to appear from the 200^{th} cycle which was relatively early in the cycle, it may be confirmed that the increase in resistance had accelerated more than twice after 600 cycles, and it may be understood that this was a difference which appeared due to the suppression of degradation in the secondary batteries of the examples.

### [Description of the Symbols]

110: Positive Electrode Collector
120, 120': Preliminary Positive Electrode Active Material Layer
300: Transfer Stack
310: Base Film
320: Lithium Metal Layer
330: Polymer Layer
400: Positive Electrode Structure
R: Roll
R.Ex.: Reference Example
Ex.: Example
C.Ex.: Comparative Example

## Claims

1. A positive electrode comprising:
a current collector; and
a positive electrode active material layer on the current collector, the positive electrode active material layer comprising a positive electrode active material and a carbonate-containing compound comprising a fluorine-containing functional group,
wherein, in a C 1s spectrum by X-ray photoelectron spectroscopy (XPS) analysis of the positive electrode, a peak intensity I_{C1} of a peak P_{c1} at a binding energy in a range of 288 eV to 292 eV is lower than a peak intensity I_{C2} of a peak P_{c2} at a binding energy in a range of 284 eV to 286 eV.

2. The positive electrode of claim 1, wherein a ratio I_{C2}/I_{C1} is 1 or less.

3. The positive electrode of claim 1, wherein, in an F 1s spectrum by XPS analysis of the positive electrode, a peak intensity I_{F1} of a peak P_{F1} at a binding energy in a range of 687 eV to 689 eV is lower than a peak intensity I_{F2} of a peak P_{F2} at a binding energy in a range of 684 eV to 686 eV.

4. The positive electrode of claim 3, wherein a ratio I_{F2}/I_{F1} is 1 or less.

5. The positive electrode of claim 1, wherein, in an O 1s spectrum by XPS analysis of the positive electrode, a peak intensity I_{O1} of a peak P_{O1} at a binding energy in a range of 531 eV to 533 eV is 4.00 or less.

6. The positive electrode of claim 1, wherein the carbonate-containing compound comprising the fluorine-containing functional group comprises at least one selected from the group consisting of fluoroethylene carbonate, methyl 2,2,2-trifluoro ethyl carbonate, and 2,2,2-trifluoroethyl carbonate.

7. A method of preparing a positive electrode, the method comprising:
forming a positive electrode structure comprising a transfer stack comprising a base film and a lithium metal layer on the base film on a preliminary positive electrode active material layer, the lithium metal layer and the preliminary positive electrode active material layer being in contact with each other; and
impregnating the positive electrode structure in an electrolyte comprising a carbonate-containing compound comprising a fluorine-containing functional group.

8. The method of claim 7, wherein the electrolyte comprises a lithium salt, and a concentration of the lithium salt in the electrolyte is in a range of more than 0.1 M to 1.0 M or less.

9. The method of claim 7, wherein a thickness of the lithium metal layer is in a range of 1 µm to 10 µm.

10. The method of claim 7, wherein a loading amount of the lithium metal layer is in a range of 4% to 40% of a loading amount of the preliminary positive electrode active material layer.

11. The method of claim 7, comprising:
rolling the positive electrode structure; and
removing the base film from the transfer stack after the forming the positive electrode structure and the rolling, and before the impregnating the positive electrode structure.

12. The method of claim 11, wherein a pressure applied to the positive electrode structure during the rolling is in a range of 10 kgf/cm to 90 kgf/cm.

13. A lithium secondary battery comprising:
the positive electrode of claim 1;
a negative electrode; and
a separator between the positive electrode and the negative electrode.

14. A lithium secondary battery comprising:
an electrode assembly comprising an overlithiated positive electrode comprising an overlithiated positive electrode active material layer, a negative electrode comprising silicon particles as an active material, and a separator between the overlithiated positive electrode and the negative electrode;
a battery case configured to accommodate the electrode assembly; and
an electrolyte injected into the battery case and configured to impregnate the electrode assembly, the electrolyte comprising a carbonate-containing compound comprising a fluorine-containing functional group,
wherein an amount of the carbonate-containing compound comprising the fluorine-containing functional group measured by inductively coupled plasma optical emission spectroscopy (ICP-OES) is 3.5 wt% or more based on a total weight of the electrode assembly and the electrolyte, and with the proviso that an amount of lithium based on a total weight of the overlithiated positive electrode active material layer of the overlithiated positive electrode measured by ICP-OES is less than 5.0 wt%.

15. The lithium secondary battery of claim 14, wherein the carbonate-containing compound comprising the fluorine-containing functional group is comprised in an amount in a range of 5.0 wt% to 10 wt% based on the total weight of the electrode assembly and the electrolyte.
